# EUROPEAN PATENT APPLICATION

(11) **EP 2 716 382 A1**
(43) Date of publication of application: **09.04.2014**
(21) Application number: 13186806.9
(22) Date of filing: 01.10.2013
(51) Int. Cl.: B21D 53/84, B21K 1/20, F01L 1/18

(54) **Method of making lubrication spray orifice for valve actuating mechanism**

(30) Priority: 03.10.2012 US 201261709312 P
(71) Applicant: GT Technologies, Westland, MI 48185-1932 (US)
(72) Inventor: Brune, John, Edmund, MI 49285 Stockbridge (US); Giesige, Terry, Joseph, OH 45830 Columbus Grove (US); Millls, Daniel, George, OH 43537 Maumee (US)
(74) Representative: DREISS Patentanwälte PartG mbB

(57) **Abstract**

A method of making a lubrication spray orifice (48) for a valve actuating mechanism (10) includes the steps of forming a dome socket (40) for a finger follower (28) of a valve actuating mechanism (10) of an engine, forming a pocket (50) in the dome socket (40) and thinning out material of the pocket (50), and forming an elongated slit opening by expanding the pocket (50) in a single lancing operation to lance a surface of the pocket to create a lubrication spray metering orifice.

## Description

### CROSS-REFERENCE TO RELATED APPLICATION(S)

The present application claims the priority date of co-pending United States Provisional Patent Application Serial Number 61/709,312, filed October 3, 2012

### BACKGROUND OF THE INVENTION

### 1. Field of the Invention

The present invention relates generally to valve actuating mechanisms for engines and, more particularly, to a method of making a lubrication spray orifice for a valve actuating mechanism for an engine.

### 2. Description of the Related Art

It is known to provide valve actuating mechanisms to open and close valves of an engine such as an internal combustion engine. These valve actuating mechanisms may be of a finger follower type including a finger follower having a pallet or web engaging a stem of the valve and a dome socket engaging a rounded end of a hydraulic lash adjuster supported by a cylinder head of the engine. The dome socket is known to have a dome with a concave recess or socket therein. Typically, a circular opening or orifice is provided in the dome for spraying lubrication fluid from the socket into a camshaft compartment for lubricating a cam and cam follower and associated components of the valve actuating mechanism. These orifices must be of a relatively large diameter, as manufacturing smaller diameters results in high wear on tooling. In addition, the large diameter of the orifice brings about a high flow rate of lubrication fluid in the cylinder head, resulting in a delayed lubrication of other engine components when cold starting the engine. When the engine heats up, the flow rate of lubrication fluid increases due to its low viscosity. In an extreme case, this requires a larger fluid pump, which in turn increases the power loss of the engine. This high volume of lubrication fluid being used at the top of the engine reduces the amount and effectivity of the lubrication fluid at the bottom of the engine, creating impingement of a crankshaft and reciprocating assembly of the engine. High volumes of the lubrication fluid at the top end of the engine creates a need to machine or form passages to drain back to the bottom. If this cannot be done efficiently, the lubrication fluid will be evacuated through the PCV system, causing high lubrication fluid consumption for the engine.

Current processes to manufacture very small diameter metering orifices utilize a secondary process such as a laser or in some cases a very small punch within a progressive die. These processes can yield orifice sizes of approximately 0.4-0.5mm. Typically, the orifice is a 0.4mm hole that is lasered drilled therein that extends from the concave recess to the exterior of the dome. The spray of lubrication fluid is directed and metered through the 0.4mm hole in the dome socket. The 0.4mm hole is typical in the industry and conducive to ease of manufacturing. However, the 0.4mm hole produces lubrication fluid flow excessive to the requirements. Further, the processes have practical limitations such as the methods are very time consuming as well as having high cost, quality issues, and tool maintenance concerns.

U.S. Patent No. 6,070,561 to Greene et al. discloses a valve actuator with a lubrication passage and method of forming same. In this patent, a finger follower includes a pivot socket formed as a raised dome. The dome is provided with a lubrication passage. The lubrication passage includes a generally cylindrical reservoir extending upwardly from the lower recess of the pivot socket and merged into an inverted inner channel. The channel is open downwardly to the reservoir and includes upwardly converging sides, meeting at a peak. The passage further includes a connecting outer channel formed in the domed upper surface and having downwardly converging sides. The inverted inner channel and the connecting outer channel are connected at the inner edge of the inner channel and the adjoining outer edge of the outer channel by a restricting opening. The opening preferably has a nonround configuration of dual noncontinuous arcs connecting at lateral edges in pointed or slightly rounded ends.

The passage is formed by what is termed a lancing operation by a pair of dies. In use, one of the dies is pressed upward into the lower recess to form the reservoir and the inner channel with its arcuate peak. The other die is simultaneously pressed downward against the dome to form the outer channel which has a more or less triangular configuration. The dies are moved simultaneously against the follower dome and overlap slightly, rubbing together at the inner and outer edges sufficiently to form the opening. Upon withdrawing of the dies, the opening and connecting channels are configured. To complete finishing of the lubrication passage, a final step of sizing the opening is performed. The sizing step is accomplished by inserting a sizing tool into the opening and forcing the sharp edges of the opening to expand slightly as they are smoothed.

The above-described process suffers from the disadvantage that a secondary operation is required to size the opening. Another disadvantage of the process is that the opening has an inverted inner channel and connecting outer channel to form a triangular configuration, which is undesired. A further disadvantage of the process is that the orifice is created by a simultaneous intersection of a peak and valley operation.

Therefore, it is desirable to provide a method of making a lubrication spray orifice in a valve actuating mechanism that acts to better manage and essentially reduce the flow of lubrication fluid to only that required to lubricate the relevant components while still enjoying a low cost of manufacturing. It is also desirable to provide a method of making a lubrication spray orifice that provides for a lubrication feature that is both relatively small in cross-sectional area and can be manufactured during a stamping process and within a progressive die, avoiding all secondary operations. Thus, there is a need in the art to provide a method of making a lubrication spray orifice in a valve actuating mechanism that meets at least one of these desires.

### SUMMARY OF THE INVENTION

It is, therefore, one object of the present invention to provide a method of making a lubrication spray orifice in a valve actuating mechanism that has a relatively small cross-sectional area.

It is another object of the present invention to provide a method of making a lubrication spray orifice in a valve actuating mechanism that avoids all secondary operations.

To achieve one or more of the foregoing objects, the present invention is directed toward a method of making a lubrication spray orifice in a valve actuating mechanism including the steps of forming a dome socket for a finger follower of a valve actuating mechanism of an engine, forming a pocket in the dome socket and thinning out material of the pocket, and forming an elongated slit opening by expanding the pocket in a single lancing operation to lance a surface of the pocket to create a lubrication spray metering orifice.

One advantage of the present invention is that a new method of making a lubrication spray orifice is provided for a valve actuating mechanism. Another advantage of the present invention is that the method eliminates costly secondary operations such as laser drills, the associated deburring process, pierce slug removal, or final sizing of the opening. Yet another advantage of the present invention is that the method reduces broken tooling risk in a stamping die. A further advantage of the present invention is that the method has the capability to tailor varying sizes of cross section based on customer requirement.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a fragmentary view a valve actuating mechanism having a lubrication spray orifice, formed according to the present invention, illustrated in operational relationship with a portion of an engine.

FIG. 2A is a plan view of a dome socket, according to the present invention, of the valve actuation mechanism of FIG. 1 having a coined profile geometry prior to forming the lubrication spray orifice.

FIG. 2B is a sectional view taken along line B-B of FIG. 2A.

FIG. 3A is a plan view of a dome socket, according to the present invention, of the valve actuation mechanism of FIG. 1 having an elongated slit opening to act as a lubrication spray metering orifice.

FIG. 3B is a sectional view taken along line B-B of FIG. 3A.

FIG. 4A is a plan view of a dome socket, according to the present invention, of the valve actuation mechanism of FIG. 1 illustrating operation of coining profile geometry.

FIG. 4B is a sectional view taken along line B-B of FIG. 4A.

FIG. 4C is a sectional view taken along line C-C of FIG. 4A.

FIG. 5A is a plan view of a dome socket, according to the present invention, of the valve actuation mechanism of FIG. 1 illustrating operation of forming an elongated slit opening to act as a lubrication spray metering orifice.

FIG. 5B is a sectional view taken along line B-B of FIG. 5A.

FIG. 5C is a sectional view taken along line C-C of FIG. 5A.

### DESCRIPTION OF THE PREFERRED EMBODIMENT(S)

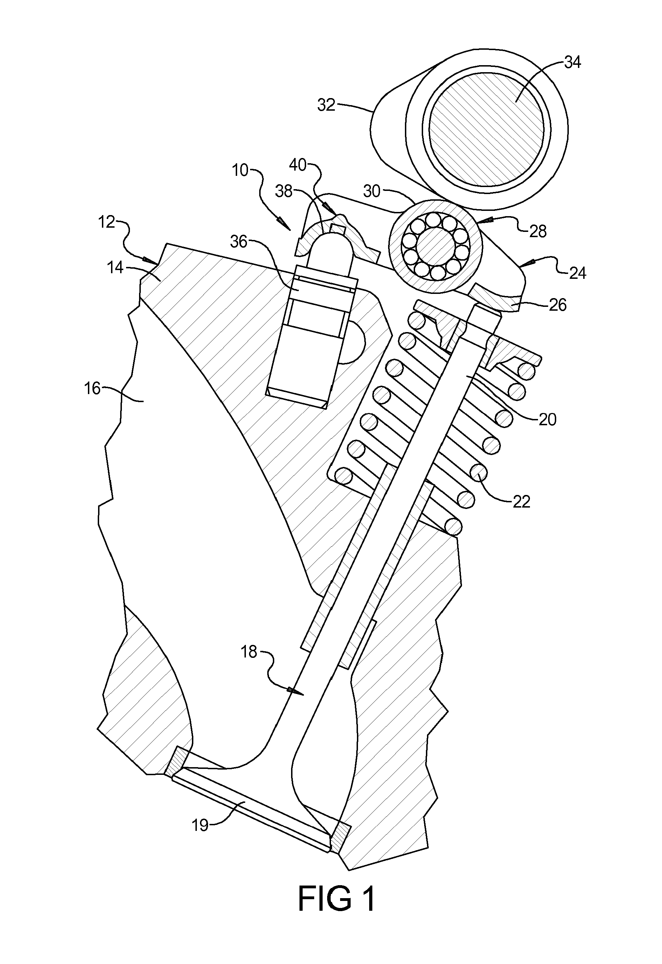

Referring now to the drawings, and in particular FIG. 1, one embodiment of a valve actuating mechanism 10 of a finger follower type is shown for an engine, generally indicated at 12. The engine 12 is of an overhead cam type having a cylinder head 14 including an inlet or exhaust port 16. The engine 12 also includes a valve 18 having a head 19 and a stem 20 extending from the head 19. The engine 12 includes a spring 22 disposed about the stem 20 that biases the head 19 of the valve 18 to a closed position. The valve actuating mechanism 10 includes a finger follower, generally indicated at 24, having a pallet or actuating pad 26 engaging the stem 20 of the valve 18. The valve actuating mechanism 10 also includes a roller cam follower 28 having an outer surface 30 engaged by an associated cam 32 of a camshaft 34. The valve actuating mechanism 10 further includes a hydraulic lash adjuster 36 that is supported by the cylinder head 14 and having a rounded end 38. The finger follower 24 includes a dome socket, generally indicated at 40 and according to the present invention, engaging the rounded end 38 of the hydraulic lash adjuster 36. It should be appreciated that the dome socket 40 is supported by the finger follower 24.

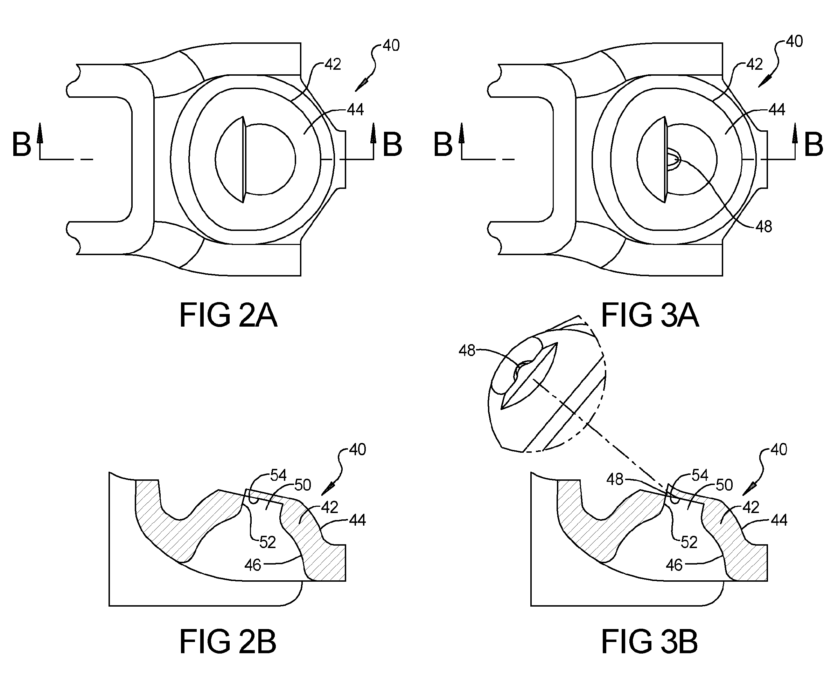

Referring to FIGS. 2A through 3B, the dome socket 40, according to the present invention, is shown. The dome socket 40 includes a dome 42 having a domed outer surface 44 for engaging an outer surface of the cam 32 and a generally spherical lower recess or socket 46 for engaging the rounded end 38 of the lash adjuster 36. The dome socket 40 also includes a lubrication spray orifice 48 in the dome 42 that fluidly communicates with the socket 46 and the exterior of the dome 42. The lubrication spray orifice 48 is formed as a slit produced during a stamping operation to be described. It should be appreciated that the socket 46 receives lubrication fluid via the lash adjuster 36 and the lubrication fluid is sprayed through the lubrication spray orifice 48.

As illustrated in FIGS. 2A through 3B, the dome socket 40 may include a generally cylindrical pocket 50 extending upwardly into the dome 42 from the socket 46 from which lubrication fluid is provided to the pocket 50 through an opening (not shown) in the rounded end 38 of the lash adjuster 36. The pocket 50 includes upwardly extending sides 52 meeting at a top 54. The top 54 extends horizontally, as shown in FIG. 2B, although its operating position in an engine may be other than a horizontal position. The lubrication spray orifice 48 is formed in the dome 42 as an elongated slit opening of a predetermined cross-sectional area that communicates with the dome outer surface 44 and the pocket 50. The opening has an arcuate configuration that directs lubrication fluid at an upward angle toward the outer surface of the associated cam follower 28 for lubricating the cam follower 28 and the associated cam 32, and, by the resulting spray, lubricating the pallet 26 which actuates the valve 18.

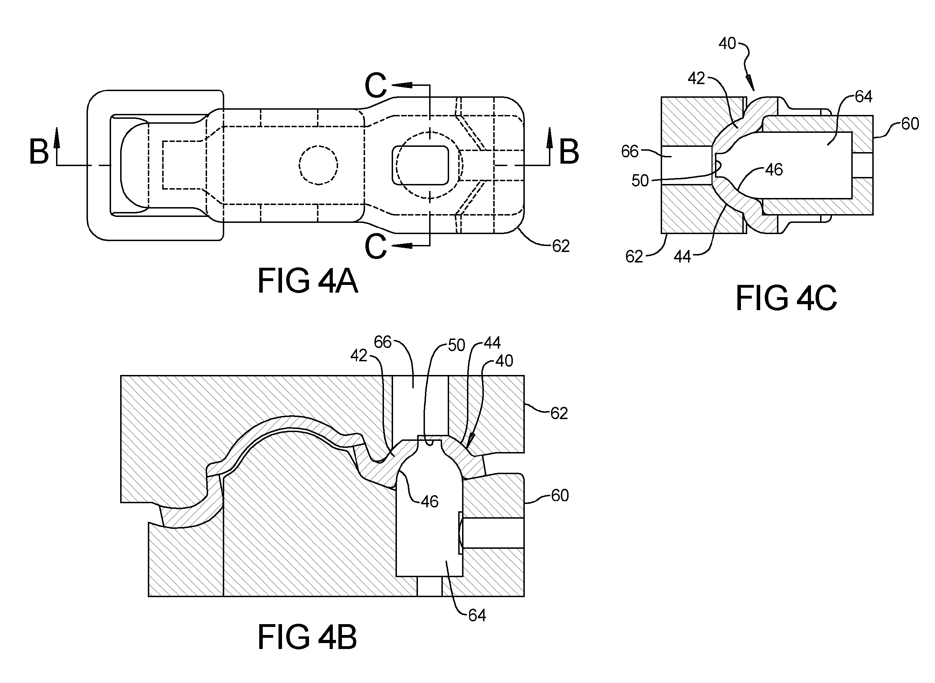

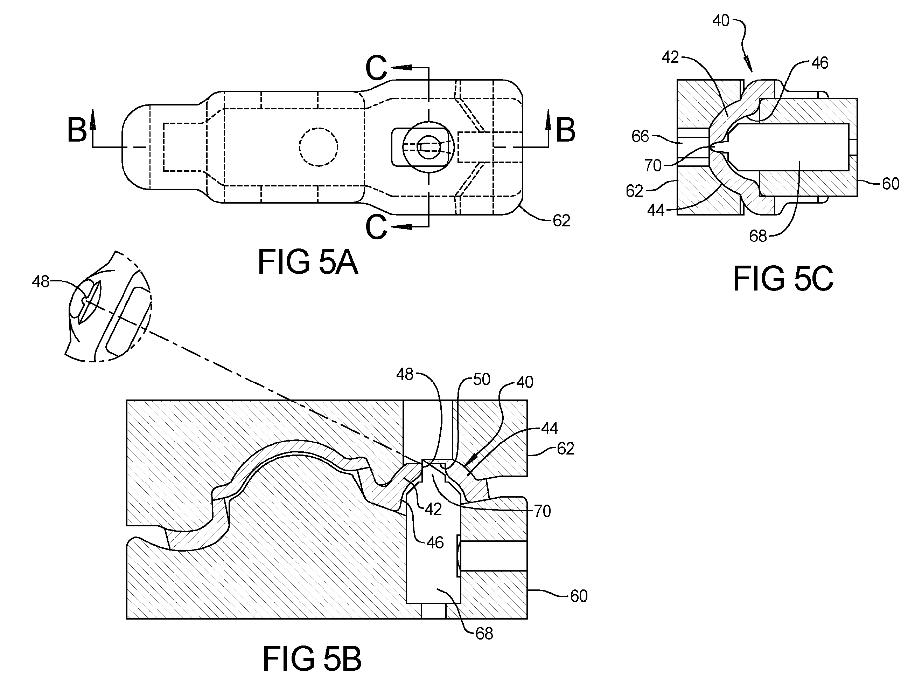

Referring to FIGS. 4A through 5C, a method of making the lubrication spray orifice 48 in the dome socket 40 of the finger follower 24 is disclosed. In general, the method includes the steps of forming a dome socket 40 for a finger follower 24 of a valve actuating mechanism 10 of an engine 12, forming a pocket 50 in the dome socket 40 and thinning out material of the pocket 50 in a coining operation, and forming an elongated slit opening by expanding the pocket 50 in a single lancing operation to lance a surface of the pocket 50 to create a lubrication spray metering orifice 48.

In order to form, in production, the finger follower 24 having the lubrication spray orifice 48 as heretofore described, the lubrication spray orifice 48 is formed by a lancing operation by a pair of dies 60, 62. For manufacturing efficiency and accuracy, the dies 60, 62 may be made as part of the dies used for forming the finger follower 24. If desired, however, the dies 60, 62 could be made and used separately. In use, material for the dome socket 40 is disposed between the dies 60, 62. The dies 60, 62 close together in a stamping operation. A forming member 64 in the one or lower die 60 is pressed upward by fluid pressure into the material for the dome socket 40 to form the dome 42, socket 48, and the pocket 50 in the dome socket 40. The forming member 64 thins out the material in a coining operation while another forming member 66 in the other or upper die 62 is simultaneously pressed downward against the dome 42 by fluid pressure as illustrated in FIGS. 4A through 4C. It should be appreciated that the thinning out of the material (coining) is done to induce the cold working needed to achieve sufficient reduction in ductility so that the subsequent lancing operation readily produces a sufficiently reduced cross sectional orifice 48 without causing a stretching of the material.

Referring to FIGS. 5a through 5C, the forming member 64 is replaced with a lancing member 68 having a V-shaped block 70. The lancing member 68 is moved in the pocket 50 toward the top wall 54 created by the coining operation to expand the pocket 50 in a single upward lancing operation to lance the top wall 54 and open a seam as an elongated slit opening of prescribed cross-sectional area such as less than 0.5 mm2 cross section area to create the lubrication spray orifice 48. Upon withdrawing of the members 66, 68, the dome socket 40 is configured as shown in FIGS. 3B. It should be appreciated that the lubrication spray orifice 48 is created by an upward lancing operation in a gothic shaped lower recess backed up by a V-shaped block at the upper surface created in the coining operation. It should also be appreciated that the pocket 50 is expanded beyond the lubrication reservoir required to thin and cold work the material to be followed by a lancing operation to create the lubrication spray orifice 48. It should further be appreciated that the method uses a single upward lancing operation to create an elongated slit opening of prescribed cross-sectional area for the lubrication spray orifice 48 that is substantially less than practically possible by conventional methods by forming the orifice 48 in the stamping process.

In operation of the valve actuation mechanism 10, the camshaft 34 of the engine 12 rotates and a cam 32 of the camshaft 34 actuates the finger follower 24. The lash adjuster 36 acts as a pivot about which the finger follower 24 is actuated to open and close an associated valve 18 of the engine 12. Lubrication fluid from the lash adjuster 36 is provided to the pocket 50 through an opening (not shown) in the rounded end 38 of the lash adjuster 36. The lubrication fluid in the pocket 50 of the dome socket 40 is sprayed through the orifice 48 in the dome 42 into the camshaft compartment for lubricating the cam 32 and cam follower 34 and associated components of the valve actuating mechanism 10.

The present invention achieves reduced lubrication fluid flow by replacing the 0.4mm hole with a slit produced during forming of the roller finger follower 24. The slit has an effective cross-sectional area that is much smaller than a 0.4mm hole but provides adequate lubrication fluid flow for this purpose. The purpose of the present invention is to provide for lubrication flow control from the roller finger follower 24, facilitating lubrication of mating surfaces and the cam roller follower, needles, axle, and camshaft interface. According to the present invention, this is solved by manufacturing an orifice 48 to spray lubrication fluid with a relatively small cross sectional area, practically even much less than 0.5 mm2 cross section area. This measure eliminates the disadvantages previously described with existing technology. Due to the low orifice cross sectional area enabled by the forming process, a very fine jet of lubrication fluid can be sprayed directly onto the path of the roller facing the cam lobe. The low orifice size of the present invention resists a pressure loss in the entire hydraulic system of the cylinder head and eliminates the need for a secondary operation. The present invention may form the orifice 48 such that the resulting spray is nearly tangential to the circumference of the roller. This enables the lubrication fluid to flow in a manner to insure sufficient lubrication of the roller bearing and camshaft interface.

Advantageously, the new process of the present invention eliminates the costly secondary operations such as laser drills, the associated deburring process, or pierce slug removal. In addition, the present invention reduces broken tooling risk in the stamping die. Further, the present invention has the capability to tailor varying sizes of cross section based on customer requirement.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A method of making a lubrication spray orifice (48) for a valve actuating mechanism (10), said method comprising the steps of:
forming a dome socket (40) for a finger follower (24) of a valve actuating mechanism (10) of an engine;
forming a pocket (50) in the dome socket (40) and thinning out material of the pocket (50); and
forming an elongated slit opening by expanding the pocket (50) in a single lancing operation to lance a surface of the pocket to create a lubrication spray metering orifice (48).

2. A method as set forth in claim 1 wherein said step of forming an elongated slit opening includes lancing a top wall of the dome socket in a single lancing operation.

3. A method as set forth in claim 2 wherein said step of forming an elongated slit opening includes the step of opening a seam in the top wall of the dome socket (40) as an elongated slit opening to create the lubrication spray orifice (48).

4. A method as set forth in claim 3 wherein said step of opening comprises opening a seam as an elongated slit of a prescribed cross-sectional area of less than 0.5 mm2 cross section area.

5. A method as set forth in claim 1 wherein said step of forming a pocket in the dome socket includes the step of thinning out the material in the dome socket by a forming member in a coining operation and creating a top wall in the dome socket.

6. A method as set forth in claim 1 including the step of providing a pair of dies (60, 62) and disposing a material for the dome socket (40) between the dies.

7. A method as set forth in claim 6 including the step of disposing a forming member (64) in one of the dies.

8. A method as set forth in claim 7 including the step of moving the one of the dies (60) toward the other one of the dies (62) and the forming member into the material for the dome socket (40).

9. A method as set forth in claim 7 including the step of disposing another forming member (66) in the other one of the dies (62).

10. A method as set forth in claim 9 including the step of pressing the other one of the dies with the another forming member against the dome socket (40).

11. A method as set forth in claim 7 including the step of replacing the forming member (64) in the one of the dies with a lancing member (68) having a V-shaped block (70).

12. A method as set forth in claim 8 including the step of moving the lancing member (68) in the pocket (50) toward a top wall (54) of the dome socket (40).

13. A method as set forth in claim 10 including the step of withdrawing the forming member from the dome socket (40).

14. A method of making a lubrication spray orifice (48) for a valve actuating mechanism (10), said method comprising the steps of:
forming a dome socket (40) for a finger follower (24) of a valve actuating mechanism (10) of an engine;
forming a pocket (50) in the dome socket (40) and thinning out material of the pocket in a coining operation;
pressing a forming member (64) against the dome socket;
moving a lancing member in the pocket toward a top wall of the dome socket (40); and
opening a seam in the top wall of the dome socket (40) with the lancing member (68) in a single lancing operation as an elongated slit opening to create a lubrication spray metering orifice (48).

15. A method as set forth in claim 14 including the step of providing a pair of dies (60, 62) and disposing a material for the dome socket (40).

16. A method as set forth in claim 15 including the step of disposing a forming member (64) in one of the dies (60).

17. A method as set forth in claim 16 including the step of moving the one of the dies toward the other one of the dies and the forming member (64) into the material for the dome socket (40) and forming the dome socket (40) and the pocket (50) in the dome socket (40).

18. A method as set forth in claim 14 wherein said step of opening a seam includes lancing a top wall (54) of the dome socket (40) with the lancing member (68) having a V-shaped block (70).

19. A method as set forth in claim 14 wherein said step of opening a seam comprises opening a seam as an elongated slit of a prescribed cross-sectional area of less than 0.5 mm2 cross section area.

20. A method of making a lubrication spray orifice (48) for a valve actuating mechanism (10), said method comprising the steps of:
providing a pair of dies (60, 62) and disposing a material for a dome socket (40) for a finger follower (24) of a valve actuating mechanism (10) of an engine between the dies;
disposing a forming member (64) in one of the dies (60);
moving the one of the dies toward the other one of the dies and the forming member (64) into the material for the dome socket (40) and forming a dome socket (40) and a pocket (50) in the dome socket (40);
thinning out the material of the pocket (50) in the dome socket (40) by the forming member (64) in a coining operation and creating a top wall (54) in the dome socket (40);
disposing another forming member (66) in the other one of the dies (62);
pressing the other one of the dies (62) with the another forming member (66) against the dome socket (40);
replacing the forming member (64) in the one of the dies (62) with a lancing member (68) having a V-shaped block (70);
moving the lancing member (68) in the pocket (50) toward the top wall (54) of the dome socket (40); and
opening a seam in the top wall (54) of the dome socket (40) with the lancing member (68) in a single lancing operation as an elongated slit opening to create a lubrication spray metering orifice (48).
